# EUROPÄISCHE PATENTANMELDUNG

(11) **EP 1 454 995 A2**
(43) Veröffentlichungstag der Anmeldung: **08.09.2004**
(21) Anmeldenummer: 04450038.7
(22) Anmeldetag: 26.02.2004
(51) Int. Cl.: C21B 3/08

(54) **Verfahren und Anlagen zur schnellen und trockenen Kühlung von Hüttenschlacken aller Art und Leistungsbereiche**

(30) Priorität: 04.03.2003 AT 3112003
(71) Anmelder: Hulek, Anton, Dipl.-Ing., A-4040 Linz (AT)
(72) Erfinder: Hulek, Anton, Dipl.-Ing., A-4040 Linz (AT)

(57) **Zusammenfassung**

Verfahren zur Erstarrung flüssiger Hüttenschlacke,wobei die Schlacke auf einen umlaufenden Förderer gegossen wird und während der Förderung erstarrt,dadurch gekennzeichnet,dass die flüssige Hüttenschlacke geregelt durch schmale und seichte Rinnenprofile des Förderers geführt wird,die quer zur Förderrichtung mit Gefälle verlaufen,während des Querfliessens bis zum Erreichen der Enden der Rinnenprofile in dünner Schicht erstarrt und bei Richtungsumkehr des Förderers durch ihr Eigengewicht abgeworfen wird.

## Beschreibung

Die Erfindung bezieht sich auf ein Verfahren und zwei Anlagenarten zur schnellen und trockenen Kühlung von Hüttenschlacken, bei dem die Schlacke in schmale und seichte Rinnenprofile, welche die Oberfläche von umlaufenden Förderern bilden, zwecks spontaner Erstarrung dünn aufgegossen wird.

Im Gegensatz zur Hochofenschlacke, die für die Zementerzeugung vorwiegend noch nass granuliert wird, sind LD-Schlacke, EAF-Schlacke und Kupolofen-Schlacke derzeit häufig ein unerwünschtes Abfallprodukt, das schwer weiterverwendet werden kann und deshalb nicht selten entsorgt werden muß.
Die Kühlung von Hochofenschlacke erfordert eine sehr große Leistungsfähigkeit der Anlagen.
Die Kühlung von LD-Schlacke erfolgt zumeist in Kühlbeeten.

Der Erfindung liegt die Aufgabe zugrunde, Nachteile bestehender Verfahren bzw. Anlagen zu vermeiden und heutige Forderungen zu erfüllen, um ein Produkt zu schaffen, das zu einer höheren Qualität und Wertschöpfung führt, weniger Kosten verursacht und bei seiner Herstellung die Umwelt möglichst wenig oder nicht belastet.

Neuere Erfindungen wie DE 30 13 557 A1, DE 28 02 941 A1, US 4 678 419 A, JP 59 1191 79 Aund JP 59 119 178 A benützen fallweise auch Trommeln zur Kühlung von Hochofenschlacke mit verschiedenen Kühlquerschnitten in Form von Rinnen. Die Rinnen sind zumeist relativ tief und werden mit flüssiger Schlacke gefüllt, um durch langsame Abkühlung eine kristallin erstarrte Schlacke zu erzielen. Die erstarrte Schlacke wird aus den Rinnen mechanisch ausgestoßen.
Kristallin erstarrte Schlacke eignet sich nur zur Herstellung von Schotter oder Zuschlagstoffen für Beton, nicht jedoch für die Zementproduktion.
Die Verfahren sind zumeist sehr aufwendig und haben auch andere Nachteile, wozu z.B. die Spritzwasserkühlung und die Umweltbelastung gehören.

Für eine trockene Kühlung von LD-, EAF- und Kupolofen-Schlacke sind keine neueren Entwicklungen bekannt.

Nach dem neuen Verfahren und den erfindungsgemäßen Anlagen fließt die dünnflüssige Hüttenschlacke mit geeigneter Temperatur und in geregelter Menge in den oberen Bereich von Rinnenprofilen eines umlaufenden Förderers. Die Rinnenprofile verlaufen quer zur Förderrichtung und weisen ein Gefälle auf Sie werden deshalb von der Schlacke rasch durchflossen, wobei eine spontan entstandene dünne Schlackenschale zurück bleibt. Bei optimalem Gefälle kommt der Schlackenfluß am unteren Ende der Rinnenprofile zum Stillstand.

Das Verfahren kann durch zwei verschiedene Anlagenarten betrieben werden:
**a** durch kegel- oder doppelkegelförmige Kühltrommeln, die mit Rinnenprofilen bestückt sind
**b** durch Umlaufförderer in Form von geschlossenen Bändern, die aus Rinnenprofilen gebildet werden und eine Neigung quer zur Bewegungsrichtung des Umlaufförderers aufweisen.

Bei Anlagen der Ausführung **a** wird die Schlacke im Scheitelbereich der doppelkegelförmigen Kühltrommel mittig auf die endlose umlaufende Folge von schmalen, zueinander parallelen, seichten Rinnenprofilen, die in Richtung Kegelspitzen aufgeschweißt sind, gegossen.

Die Trommelachse befindet sich in waagrechter Position. Infolge der Konizität der Kegelstümpfe sind auch die Rinnenprofile konisch. Sie können auch ohne darunter liegendem Kegelmantel dicht aneinandergeschweißt werden.

Die Beaufschlagung der Trommel wird so geregelt, daß der Schlackenfluß in den Profilrinnen noch vor dem äußeren geschlossenen Ende der Rinnen zum Stillstand kommt. Die Schlacke erstarrt in wenigen Sekunden und ist daher glasig bzw. amorph. Derartige Hochofen-Schlacke hat die Qualität für die Zementerzeugung und ist infolge der dünnen Querschnitte auch gut brech- und mahlbar. In Abhängigkeit von der Drehzahl der Trommel mit etwa 1 bis 2 UpM wird die Schlacke nach ca. 15 bis 30 sec. durch ihr Eigengewicht abgeworfen.
Das Produkt kann sofort mit minimalem Aufwand gebrochen und zur Restkühlung in Kühlschächte mit Wärmerückgewinnung oder in Form von Schüttkegeln zwischengelagert werden. Da die Schlacke völlig trocken ist, kann sie auch unmittelbar nach der Restkühlung gemahlen werden.

Die Kapazitäten dieser Anlagen reichen je nach Trommeldurchmesser und Trommellänge z.B. bis 150 t/h.

Die Kühlung der Trommel erfolgt von innen. Es kann über das Kühlwasser sehr einfach Wärme rückgewonnen werden. Die aufgeschweißten Profilrinnen liegen dicht nebeneinander. Die Hohlräume an der Rinnenunterseite werden durch Schlitze im Trommelmantel ebenfalls vom Kühlwasser der Trommel durchspült. Im Falle einer unmittelbaren Zusammenschweißung der Rinnenprofile ohne darunterliegenden Kegelmantel können die Hohlräume vermieden werden.
Durch die Möglichkeit, die Rinnenprofile mit unterschiedlichem Querschnitt und unterschiedlichem Gefälle auszubilden, kann die Weiterverarbeitung von LD- und EAF-Schlacke zu Schotter und von Hochofen-Schlacke zu Mahlgut begünstigt werden.

Bei Anlagen der Ausführung **b** wird die flüssige Schlacke wie bei **a** im oberen Bereich in die Rinnenprofile, die das Umlaufband bilden und quer zur Bewegungsrichtung des Umlaufbandes ein Gefälle aufweisen, gegossen. Ähnlich wie bei der Ausführung **a** können die Querschnitte der Rinnenprofile zwecks besserer Weiterverarbeitung der erstarrten Schlacke unterschiedlich ausgeführt werden.

Die Schlacke erstarrt während des Fließens in den Rinnenprofilen in dünnen Schalen, die in den Rinnenprofilen zurück bleiben und am Ende des Umlaufförderers durch ihr Eigengewicht abgeworfen werden.

Der Fließvorgang und die Schlackenerstarrung endeh am unteren Ende der Rinnenprofile.
Die Länge und das Gefälle der Rinnenprofile sowie die Bandlänge und Bandgeschwindigkeit des Umlaufförderers werden dem Fließverhalten und dem gewünschten Durchsatz angepaßt.
Die Kühlung des bandförmigen Umlaufförderers erfolgt im unteren Trum mit Spritzwasser.
Bei Rinnenprofilen mit Kühlbohrungen und flexiblen Kühlwasserverbindungen ist auch eine Innenkühlung möglich.

### Zeichnungen

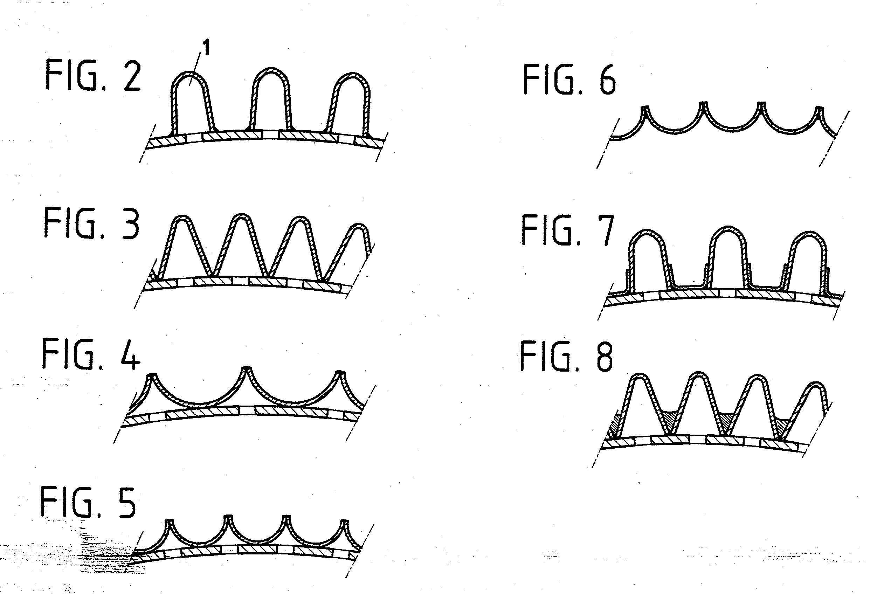

- **Fig. 1**: zeigt eine Gesamtansicht der Anlage nach **a** mit einer Kühltrommel in Doppelkegelform
- **Pos. 5**: zeigt die Beaufschlagung der Schlacke auf die Trommel in geregelter Menge mittels Zwischengefäß
- **Pos. 1**: zeigt einen Schlackenverteiler
- **Pos.7**: zeigt eine Nacherwärmungsvorrichtung
- **Pos. 6**: zeigt ein Förderband für die Austragung
- **Fig.9**: zeigt die Kühltrommel bestehend aus zwei Kegelstümpfen und dem Schlackenverteiler
- **Pos. 10**: zeigt die Kühltrommel mit der waagrechten Achse 9
- **Pos 8**: zeigt die Rinnenprofile
- **Fig. 2 bis 5**: zeigen unterschiedliche Rinnenquerschnitte mit Schlitzverbindungen zwischen den Hohlräumen unter den Rinnen und der Trommel.
- **Fig. 6**: zeigt einen Trommelquerschnitt mit Rinnenprofilen ohne darunter liegendem Kegelmantel

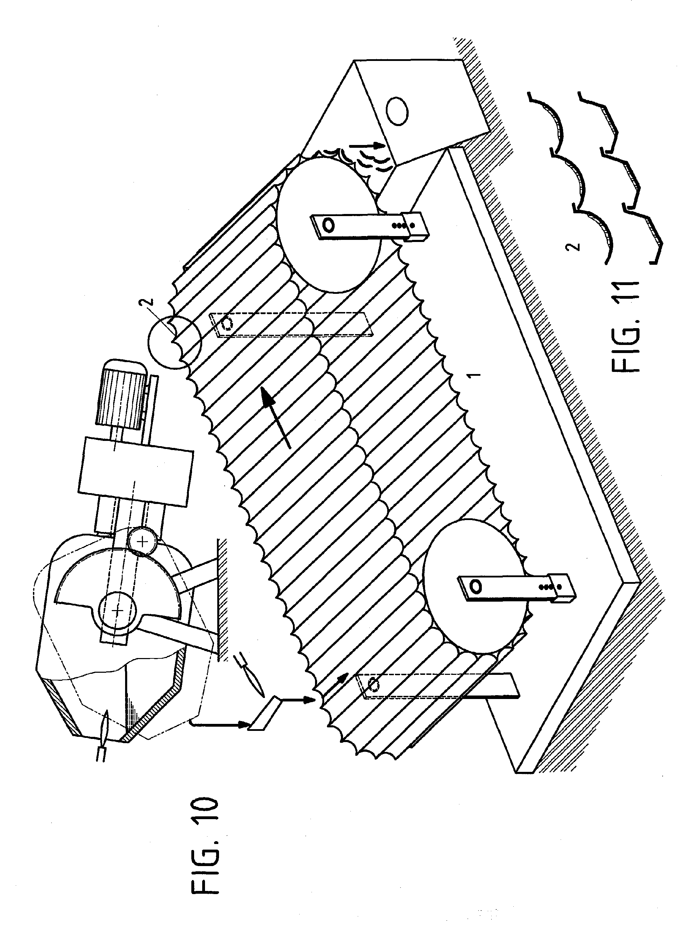

- **Fig. 7 und 8**: zeigen Schlacke nach Durchfluß durch die Rinne als Querschnitt durch Rinne und Schlacke
- **Fig. 10**: zeigt eine Gesamtansicht einer Anlage nach **b** mit bandbförmigem Umlaufförderer
- **Pos. 1**: zeigt das geschlossene Band aus Rinnenprofilen
- **Pos. 2**: zeigt Rinnenprofile
- **Fig 11**: zeigt Rinnenprofile in größerem Maßstab

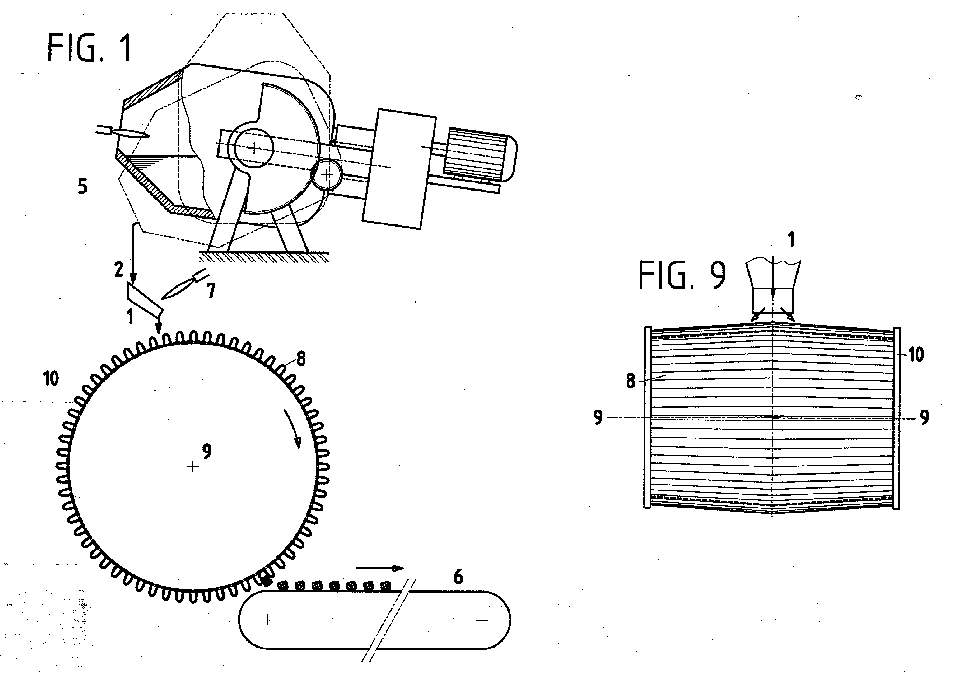

Im folgenden sind die beiden Anlagenarten **a** und **b** der Erfindung im einzelnen beschrieben:
**a** Die in Fig. 1 dargestellte Gesamtanlage gemäß der Erfindung umfaßt eine drehbare doppelkegelstumpfförmige Trommel laut Pos lomit horizontaler Achse 9, eine geschlossene Bestückung des gesamten Trommelumfanges mit konischen Rinnenprofilen laut Pos 8 die auf die Trommel unter Bildung von Hohlräumen laut Fig. 2 Pos. 1 aneinandergereiht, wasserdicht aufgeschweißt sind.
   Alternativ kann die doppelkegelförmige Trommel unmittelbar also ohne darunterliegenden Trommelmantel durch dichte und feste Schweißverbindungen laut Fig.6 gebildet werden.
   Die Beschickung der Trommel gemäß Fig.1 Pos.2 erfolgt von einem regelbaren Zwischengefäß gemäß Fig.1 Pos.5 über einen Verteiler gemäß Pos.1.
   Die erstarrten Schlackenkörper werden auf ein Förderband gemäß Fig.1 Pos.6 zur Austragung und weiteren Kühlung abgeworfen.
   Das wesentliche Merkmal der Anlage nach **a** der Erfindung ist eine Kühltrommel mit Kegeloder Doppelkegelform, die mit unterschiedlichen Rinnenprofilen bestückt ist, welche es ermöglicht, den geregelten Schlackenstrom rasch über eine große Oberfläche sehr dünn zu vergießen und damit zu einer glasigen Erstarrung zu führen.
   Der Kegelwinkel bzw. das Gefälle der Rinnen wird bei größerer durchschnittlicher Viskosität der Schlacke und bei gefordertem großen Schlackendurchsatz entsprechend vergrößert. Gleichzeitig werden Länge, Durchmesser und Drehzahl der Trommel ebenfalls angepaßt und vergrößert.
**b** Die in Fig.10 dargestellte Gesamtanlage gemäß der Erfindung umfaßt einen Umlaufförderer aus Rinnenprofilen, die quer zur Bewegungsrichtung des Förderers verlaufen und ein Gefälle aufweisen. Das Gefälle wird durch Querneigung des gesamten Förderers bewirkt. Die Rinnenprofile können wie bei der Ausführung **a** dem Verwendungszweck der Schlacke angepaßt werden. Die Beaufschlagung mit Schlacke erfolgt gleich wie bei der Anlage nach **a**.

Das wesentliche Merkmal der Anlage nach **b** der Erfindung ist ein geschlossener Umlaufförderer aus Rinnenprofilen mit Gefälle, auf die der Schlackenfluß an deren oberen Enden geregelt gegossen wird.
Die Länge des Bandes des Umlaufförderers, das Gefälle der Rinnenprofile und deren Länge können dem erforderlichen Durchsatz und den Fließeigenschaften der Schlacke angepaßt werden.

## Patentansprüche

1. **Verfahren** zur Erstarrung flüssiger Hüttenschlacke,wobei die Schlacke auf einen umlaufenden Förderer gegossen wird und während der Förderung erstarrt, **dadurch gekennzeichnet, dass** die flüssige Hüttenschlacke geregelt durch schmale und seichte Rinnenprofile des Förderers geführt wird,die quer zur Förderrichtung mit Gefälle verlaufen, während des Querfliessens bis zum Erreichen der Enden der Rinnenprofile in dünner Schicht erstarrt und bei Richtungsumkehr des Förderers durch ihr Eigengewicht abgeworfen wird.

2. Anlage zue Durchführung des Verfahrens nach Anspruch 1mit einem umlaufenden Förderer für die eingegossene Schlacke **dadurch gekennzeichnet,dass** der Förderer aus einer Kühltrommel in Form wenigstens **eines** Kegelstumpfes besteht, dessen Mantel aus Rinnenprofilen in Richtung der Kegelerzeugenden gebildet wird.

3. Anlage nach Anspruch 1 und 2 **dadurch gekennzeichnet,dass** die Kühltrommel ein Wasserkühlsystem mit Wärmerückgewinnung aufweist.

4. Anlage nach Anspruch 1 bis 3 **dadurch gekennzeichnet, dass** die Rinnenprofile unterschiedliche Querschnitte aufweisen.

5. Kühltrommel nach Anspruch 2 **dadurch gekennzeichnet,dass** sie Schlitze zur Verbindung der Hohlräume unter den Rinnenprofilen mit dem Innenraum der Kühltrommel zur Kühlung und Wärmerückgewinnung aufweist

6. Anlage nach Anspruch 1 **dadurch gekennzeichnet,dass** sie aus einem um Umlaufrollen geführtem Band besteht,das aus Rinnenprofilen gebildet wird,wobei die Achsen der Umlenkrollen geneigt verlaufen und die Neigung der Achsen,die auch die Neigung der Rinnenprofile ist,verstellt werden kann.
